# EUROPEAN PATENT SPECIFICATION

(11) **EP 3 029 693 B1**
(45) Date of publication and mention of the grant of the patent: **10.01.2018**
(21) Application number: 15196500.1
(22) Date of filing: 26.11.2015
(51) Int. Cl.: H01F 41/02, H01F 1/057

(54) **METHOD OF BONDING ND-FE-B PERMANENT MAGNETS**
VERFAHREN ZUM VERBINDEN VON ND-FE-B-PERMANENTMAGNETEN
PROCÉDÉ DE COLLAGE D'AIMANTS PERMANENTS ND-FE-B

(30) Priority: 28.11.2014 CN 201410698074
(43) Date of publication of application: 08.06.2016
(73) Proprietor: Yantai Shougang Magnetic Materials Inc., 265500 Yantai (CN)
(72) Inventor: PENG, Zhongjie, 265500 Yantai City (CN); JIA, Daoning, 265500 Yantai City (CN); YANG, Kunkun, 265500 Yantai City (CN)
(74) Representative: Neigenfink, Jan Cornelius

(56) References cited:
- EP-A2- 1 315 267
- WO-A1-2013/145088
- WO-A1-2014/010363
- CN-A- 101 763 929
- DE-A1- 2 263 656
- DE-T5-112012 005 566
- JP-A- 2001 210 507
- US-A1- 2004 046 469
- US-A1- 2013 076 469
- US-A1- 2014 320 246

## Description

The present invention relates to Nd-Fe-B permanent magnets adhesive technology, specifically to a bonding method of Nd-Fe-B permanent magnets.

### Technical Background

In recent years, with the increasing use of Nd-Fe-B permanent magnets on the motor, eddy-current loss has become a key factor affecting the reliable operation of high speed permanent magnet motors. Due to the weak heat dissipation, magnets in high speed may be demagnetized by temperature rise and eddy-current loss increases. By bonding many Nd-Fe-B permanent magnets together the eddy-current loss may be reduced.

Conventionally methods include bonding the magnets by applying glass beads mixed adhesives on the Nd-Fe-B permanent magnets surface, joining the magnets together and cure them by heating. One drawback of these methods is that adding the glass beads reduces the adhesive strength of the glue. Further, the glass beads are usually not of the same size. Thus, it is difficult to form a bonding layer of uniform thickness.

A method of bonding Nd-Fe-B permanent magnets together is already known from CN101763929A.

### Summary of Invention

The invention overcomes the shortage of the existing technologies and provides a bonding method for Nd-Fe-B permanent magnets.

According to the present invention there is provided a method of bonding Nd-Fe-B permanent magnets together. The method includes the steps of:
a) degreasing and activating adhesion surfaces of the Nd-Fe-B permanent magnets;
b) coating only an insulating adhesive on the adhesion surfaces of the Nd-Fe-B permanent magnets such that a thickness of an adhesive layer is 1 to 100µm, wherein the insulating adhesive is a thermosetting resin;
c) putting the coated magnets into an oven and initial curing the insulating adhesive at a temperature T1 of 20°C to 250°C for 0.1h to 24h so as to partially cure the insulating adhesive;
d) stacking (or superposing) the Nd-Fe-B permanent magnets together in a fixing tool and curing the insulating adhesive under pressure of 0.1MPa to 10 MPa and a temperature T2 of 150°C to 350°C for 0.1h to 12h so as to complete the curing of the insulating adhesive; and
e) stop heating and allow to cool down the bonded Nd-Fe-B permanent magnets to room temperature.

Preferably, step a) of decreasing and activation of the adhesion surfaces is performed by phosphate treatment, followed by surface degrease with ethyl alcohol, naphtha, acetone and/or isopropyl alcohol until the surface is free of rust and grease, finally followed by conducting a low temperature plasma treatment.

According to another preferred embodiment of the invention, the insulating adhesive is an epoxy resin.

According to another preferred embodiment of the invention, step b) of coating the adhesive surfaces is performed by spraying coating or by means of a brush or roller. According to another prefered embodiment of the invention, 2 to 25 magnets are superposed in the fixing tool. According to another prefered embodiment of the invention, step e) is followed by secondary machining of the bonded magnets. For example, the bonded magnets may be target sized by multiple wire cutting or a slicing machine and the sized magnets may be spray coated, for example with a coating thickness of 8 to 50 µm.

Since the thickness of the adhesive coating is 1 to 100µm, the final bonding layer between two single magnets may have a thickness of 2 to 200 µm.

The Nd-Fe-B permanent magnets used for the present bonding process may be (freshly) sintered Nd-Fe-B permanent magnets or Nd-Fe-B permanent magnets including heavy rare earth elements diffused therein. The Nd-Fe-B permanent magnets may preferably contain Tb or Dy.

Further embodiments of the invention could be learned for the depending claims and following description.

### Brief Description of the Drawings

The invention will now be described in more detail according to an embodiment illustrated in the drawings, wherein:
- Figure 1: illustrates a simplified cross-sectional view of a magnet stack formed of a plurality of Nd-Fe-B permanent magnets, which are fixed together by means of an electrically insulating adhesive.
- Figure 2: illustrates a schematically view on a fixing tool, which is adapted for performing the inventive bonding process.

### Mode of Carrying out the Invention

The present invention will now be described in exemplary embodiments, which however should not be construed to be limiting.

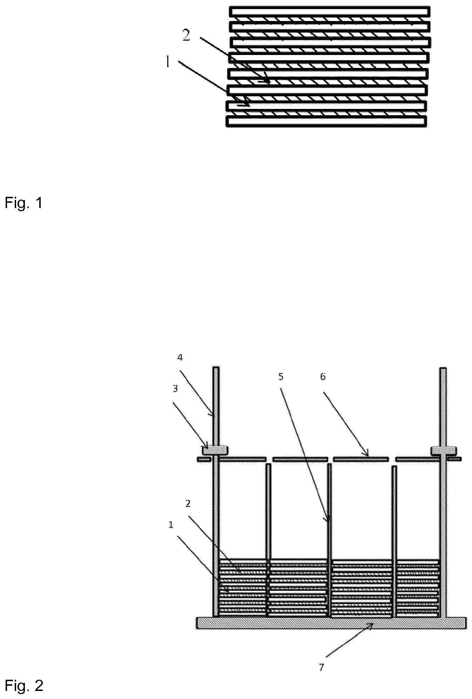

Figure 1 shows a simplified cross-sectional view of a magnet stack consisting of an arrangement of a plurality of Nd-Fe-B permanent magnets 1, which are fixed together by means of an adhesive layer 2. Hereinafter, the magnets used for processing are freshly sintered Nd-Fe-B permanent magnets or Nd-Fe-B permanent magnets, which have been freshly modified by heavy rare earth diffusion. The magnet stacks may be manufactured as follows.

### Example 1 - General Description of the Manufacturing Process

An adhesive surface of the Nd-Fe-B permanent magnets is cleaned by phosphate treatment. Then the adhesive surface is degreased with alcohol, naphtha, acetone, isopropyl alcohol or mixtures thereof until the surface is free of rust and grease. Finally, low temperature plasma treatment is conducted, wherein the plasma treatment time is ≤10min.

Afterwards, an insulating adhesive is applied onto the cleaned magnet surfaces. Here, the insulation adhesive is a thermosetting resin, in particular an epoxy resin or phenol resin or a mixture thereof. The resin is applied by spraying or means of a brush or roller. A thickness of the adhesive layer 2 is set to be 1 to 15µm for a single coating step and, if necessary, the coating step may be repeated until the adhesive layer has a thickness of at most 100µm.

The coated magnets are put into an oven and initial curing at a temperature T1 of 20°C to 250°C for 0.1 h to 24h is started. During the initial curing the adhesive layer is only partially cured to allow easy handling of the coated magnets.

At least two and up to twenty-five of the coated Nd-Fe-B permanent magnets are superposed in a fixing tool 4 starting from a bottom plate 7 (see Figure 2). Here, the fixing tool 4 includes four rows interrupted by guide rails 5 for superposing the coated magnets 1. After inserting the coated magnets 1, a top plate 6 is moved onto the magnets 1. Then two bolts 3 are tightened by means of a torque wrench such that a pressure is 0.1 MPa to 10 MPa. If the pressure is less than 0.1 MPa, the adhesive will not sufficiently bond together in the following process steps. If the pressure is more than 10 MPa, deformation of the adhesive layer may occur.

The fixing tool 4 including the magnets 1 is put into an oven. The second curing temperature T2 is set to be 150°C to 350°C and the curing time is 0.1 h to 12 h. During the second curing step, the polymerization of the adhesive is completed and the magnets 1 are bond together. Since the adhesive already had an initial curing, the adhesive will not flow during the second curing and deformation of the adhesive layer will be avoided.

After the second curing step, the fixing tool is taken from the oven and cooled down to room temperature. Machine processing may be continued by (multiple) wire cutting followed by spray coating of the machine magnets (e.g. with a thickness of 8µm to 50µm).

### Example 2 - Specific Example

An adhesive surface of sintered Nd-Fe-B permanent magnets is cleaned by phosphate treatment. Then the adhesive surface is degreased with alcohol, naphtha, acetone, isopropyl alcohol or mixtures thereof until the surface is free of rust and grease. Finally, low temperature plasma treatment is conducted.

Afterwards, an insulating adhesive is spray coated onto the cleaned magnet surfaces. Here, the insulation adhesive is a thermosetting resin, in particular an epoxy resin. A thickness of the adhesive layer is set to be 1µm.

The coated magnets are put into an oven and initial curing at a temperature T1 of 20°C for 24h is started. During the initial curing the adhesive layer is only partially cured to allow easy handling of the coated magnets.

Two of the coated Nd-Fe-B permanent magnets are superposed in the fixing tool 4. After inserting the coated magnets 1, the top plate 6 is moved onto the magnets 1. Then the two bolts 3 are tightened by means of a torque wrench such that a pressure is 0.1 MPa.

The fixing tool 4 including the magnets 1 is put into an oven. The second curing temperature T2 is set to be 150°C and the curing time is 12 h.

After the second curing step, the fixing tool is taken from the oven and cooled down to room temperature. Machine processing is continued by multiple wire cutting followed by spray coating of the machine magnets (coating thickness 8µm).

### Example 3 - Specific Example

An adhesive surface of Nd-Fe-B permanent magnets, which are provided after an heavy rare earth diffusion process, is cleaned by phosphate treatment. Then the adhesive surface is degreased with alcohol, naphtha, acetone, isopropyl alcohol or mixtures thereof until the surface is free of rust and grease. Finally, low temperature plasma treatment is conducted.

Afterwards, an insulating adhesive is spray coated onto the cleaned magnet surfaces. Here, the insulation adhesive is a thermosetting resin, in particular an epoxy resin. A thickness of the adhesive layer is set to be 50µm.

The coated magnets are put into an oven and initial curing at a temperature T1 of 135°C for 24h is started. During the initial curing the adhesive layer is only partially cured to allow easy handling of the coated magnets.

Twelve of the coated Nd-Fe-B permanent magnets are superposed in the fixing tool 4. After inserting the coated magnets 1, the top plate 6 is moved onto the magnets 1. Then the two bolts 3 are tightened by means of a torque wrench such that a pressure is 5 MPa.

The fixing tool 4 including the magnets 1 is put into an oven. The second curing temperature T2 is set to be 250°C and the curing time is 6 h.

After the second curing step, the fixing tool is taken from the oven and cooled down to room temperature. Machine processing is continued by multiple wire cutting followed by spray coating of the machine magnets (coating thickness 29µm).

### Example 4 - Specific Example

An adhesive surface of Nd-Fe-B permanent magnets, which are provided after an heavy rare earth diffusion process, is cleaned by phosphate treatment. Then the adhesive surface is degreased with alcohol, naphtha, acetone, isopropyl alcohol or mixtures thereof until the surface is free of rust and grease. Finally, low temperature plasma treatment is conducted.

Afterwards, an insulating adhesive is spray coated onto the cleaned magnet surfaces. Here, the insulation adhesive is a thermosetting resin, in particular an epoxy resin. A thickness of the adhesive layer is set to be 100µm.

The coated magnets are put into an oven and initial curing at a temperature T1 of 250°C for 0.1h is started. During the initial curing the adhesive layer is only partially cured to allow easy handling of the coated magnets.

Twenty-five of the coated Nd-Fe-B permanent magnets are superposed in the fixing tool 4.

After inserting the coated magnets 1, the top plate 6 is moved onto the magnets 1. Then the two bolts 3 are tightened by means of a torque wrench such that a pressure is 10 MPa.

The fixing tool 4 including the magnets 1 is put into an oven. The second curing temperature T2 is set to be 350°C and the curing time is 0.1 h.

After the second curing step, the fixing tool is taken from the oven and cooled down to room temperature. Machine processing is continued by multiple wire cutting followed by spray coating of the machine magnets (coating thickness 50µm).

## Claims

1. A method of bonding Nd-Fe-B permanent magnets together, the method including the steps of:
a) degreasing and activating adhesion surfaces of the Nd-Fe-B permanent magnets;
b) coating only an insulating adhesive on the adhesion surfaces of the Nd-Fe-B permanent magnets such that a thickness of an adhesive layer is 1 to 100µm, wherein the insulating adhesive is a thermosetting resin;
c) putting the coated magnets into an oven and initial curing the insulating adhesive at a temperature T1 of 20°C to 250°C for 0.1h to 24h so as to partially cure the insulating adhesive;
d) stacking the Nd-Fe-B permanent magnets together in a fixing tool (4) and curing the insulating adhesive under pressure of 0.1 MPa to 10 MPa and a temperature T2 of 150°C to 350°C for 0.1h to 12h so as to complete the curing of the insulating adhesive; and
e) stop heating and allow to cool down the bonded Nd-Fe-B permanent magnets to room temperature.

2. The method of claim 1, wherein step a) of decreasing and activation of the adhesion surfaces is performed by phosphate treatment, followed by surface degrease with ethyl alcohol, naphtha, acetone and/or isopropyl alcohol until the surface is free of rust and grease, finally followed by conducting a low temperature plasma treatment.

3. The method of claim 1, wherein the insulating adhesive is an epoxy resin.

4. The method of claim 1, wherein step b) of coating the adhesive surfaces is performed by spraying coating or by means of a brush or roller.

5. The method of claim 1, wherein 2 to 25 magnets are superposed in the fixing tool (4).

6. The method of claim 1, wherein step e) is followed by secondary machining of the bonded magnets.

## Patentansprüche

1. Ein Verfahren zum Verbinden von Nd-Fe-B-Permanentmagneten, wobei das Verfahren die folgenden Schritte aufweist:
a) Entfetten und Aktivieren von Klebeflächen der Nd-Fe-B-Permanentmagneten;
b) Beschichten der Klebeflächen der Nd-Fe-B-Permanentmagneten nur mit einem isolierenden Klebemittel derart, dass eine Dicke einer Klebeschicht 1 bis 100µm beträgt, wobei das isolierende Klebemittel ein wärmehärtbares Harz ist;
c) Platzieren der beschichteten Magnete in einen Ofen und Anhärten des isolierenden Klebemittels bei einer Temperatur T1 von 20°C bis 250°C für 0,1h bis 24h, um das isolierende Klebemittel teilweise auszuhärten;
d) Miteinander-Stapeln der Nd-Fe-B-Permanentmagneten in einem Fixierwerkzeug (4) und Härten des isolierenden Klebemittels bei einem Druck von 0,1MPa bis 10MPa und einer Temperatur T2 von 150°C bis 350°C für 0,1h bis 12h, um die Härtung des isolierenden Klebemittels zu vollenden; und
e) Beenden des Heizens und Ermöglichen, dass die verbundenen Nd-Fe-B-Permanentmagneten auf Raumtemperatur abkühlen.

2. Das Verfahren nach Anspruch 1, wobei Schritt a) des Entfettens und Aktivierens der Klebeflächen durch eine Phosphatbehandlung erfolgt, gefolgt vom Oberflächenentfetten mit Ethylalkohol, Naphtha, Aceton und/oder Isopropylalkohol, bis die Oberfläche frei von Rost und Fett ist, und zuletzt gefolgt vom Durchführen einer Niedertemperatur-Plasmabehandlung.

3. Das Verfahren nach Anspruch 1, wobei das isolierende Klebemittel ein Epoxidharz ist.

4. Das Verfahren nach Anspruch 1, wobei Schritt b) des Beschichtens der Klebeflächen durch Sprühbeschichten oder mittels einer Bürste oder einer Rolle durchgeführt wird.

5. Das Verfahren nach Anspruch 1, wobei 2 bis 25 Magneten im Fixierwerkzeug (4) übereinander angeordnet werden.

6. Das Verfahren nach Anspruch 1, wobei nach Schritt e) ein sekundäres Bearbeiten der verbundenen Magneten erfolgt.

## Revendications

1. Un procédé de collage d'aimants permanents Nd-Fe-B, le procédé comprenant les étapes suivantes :
a) dégraisser et activer des surfaces d'adhérence des aimants permanents Nd-Fe-B ;
b) revêtir les surfaces d'adhérence des aimants permanents Nd-Fe-B seulement d'un adhésif isolant de telle manière qu'une épaisseur d'une couche adhésive soit comprise entre 1 et 100µm, l'adhésif isolant étant une résine thermodurcissable ;
c) placer les aimants revêtus dans un four et effectuer un durcissement initial de l'adhésif isolant à une température T1 comprise entre 20°C et 250°C pendant 0,1h à 24h afin de durcir partiellement l'adhésif isolant ;
d) empiler ensemble les aimants permanents Nd-Fe-B dans un outil de fixation (4) et durcir l'adhésif isolant sous une pression de 0,1MPa à 10MPa et à une température T2 comprise entre 150°C et 350°C pendant 0,1h à 12h afin de compléter le durcissement de l'adhésif isolant, et
e) arrêter le chauffage et permettre le refroidissement des aimants permanents Nd-Fe-B liés à température ambiante.

2. Le procédé selon la revendication 1, dans lequel l'étape a) du dégraissage et de l'activation des surfaces d'adhérence est effectuée par un traitement au phosphate, suivi d'un dégraissage de surface par de l'alcool éthylique, du naphta, de l'acétone et/ou de l'alcool isopropylique jusqu'à ce que la surface soit exempte de rouille et de graisse, et enfin suivi de la réalisation d'un traitement au plasma à basse température.

3. Le procédé selon la revendication 1, dans lequel l'adhésif isolant est une résine époxy.

4. Le procédé selon la revendication 1, dans lequel l'étape b) du revêtement des surfaces d'adhérence est effectuée par un revêtement par pulvérisation ou à l'aide d'une brosse ou d'un rouleau.

5. Le procédé selon la revendication 1, dans lequel 2 à 25 aimants sont superposés dans l'outil de fixation (4).

6. Le procédé selon la revendication 1, dans lequel l'étape e) est suivie d'un usinage secondaire des aimants liés.
